# EUROPEAN PATENT SPECIFICATION

(11) **EP 4 160 004 B1**
(45) Date of publication and mention of the grant of the patent: **14.05.2025**
(21) Application number: 22198201.0
(22) Date of filing: 27.09.2022
(51) Int. Cl.: F03D 1/06

(54) **MODULAR WIND TURBINE BLADE**
MODULARE WINDTURBINENSCHAUFEL
PALE D'ÉOLIENNE MODULAIRE

(30) Priority: 29.09.2021 DK PA202170476
(43) Date of publication of application: 05.04.2023
(73) Proprietor: VESTAS WIND SYSTEMS A/S, 8200 Aarhus N (DK)
(72) Inventor: BECH, Anton, Aarhus N (DK)
(74) Representative: Vestas Patents Department

(56) References cited:
- WO-A1-2021/004723
- US-A1- 2008 069 699
- US-A1- 2016 341 177
- US-B2- 10 605 227

## Description

### Technical field

The present invention relates generally to wind turbine blades and more specifically to a modular wind turbine blade and a method for assembling a modular wind turbine blade.

### Background

Providing a wind turbine with larger blades increases the swept area of the rotor, allowing the wind turbine to capture increased amounts of energy from the wind. However, wind farms are typically situated in remote locations which may be difficult to access. As such, transporting large wind turbine blades to a wind farm site can be difficult. Some modern wind turbine blades are therefore designed as a modular assembly comprising two or more blade modules. The modules may be transported separately before being assembled to form the wind turbine blade on-site. However, assembling a wind turbine blade from separate blade modules introduces a number of challenges.

US10605227 describes a segmented wind turbine rotor blade having a welded joint. WO2021/004723 and US2008/0069699 describe segmented wind turbine blades where blade sections are joined together with finger joints.

One particular challenge is ensuring that the joint between blade modules is sufficiently robust. Dividing the blade into separate modules interrupts the load paths which distribute loads throughout the blade in use. The joint between blade modules is therefore an important area of the modular blade in terms of load transfer and distribution, especially with increasingly longer and heavier blades. Loads must be transferred effectively between modules to ensure safe use for the lifetime of the blade.

On-site assembly is another challenge of modular wind turbine blades. For example, modular blade joints typically require precise alignment between mating components of each blade module. Supporting and manoeuvring a heavy blade module on-site to align interfacing components with such a high degree of accuracy can be very difficult.

In some cases, adjacent blade modules may be connected via a plurality of joints to distribute loading. Assembling such a modular blade often requires each of the joints between the blade modules to be formed simultaneously. This can be problematic if the blade modules are connected via a plurality of bonded joints. The increased time that bonding faces and/or wet adhesive remain exposed whilst each joint is prepared increases the risk of contamination and inclusion of foreign particles or moisture in the joints. This can be detrimental to the longevity of the connection between the blade modules.

It is against this background that the present invention has been developed.

### Summary

In a first aspect of the invention there is provided a modular wind turbine blade according to claim 1.

Width may refer to a dimension in a chordwise direction, i.e. a chordwise width. The chordwise direction may be substantially perpendicular to the spanwise direction. The chordwise direction may be substantially parallel to a chord line between a leading edge and a trailing edge of the modular wind turbine blade.

The intermediate portion of the at least one connection element may have a spanwise length greater than or equal to the spanwise length of the first and/or second tapered portion of the at least one connection element. Such a configuration may provide an intermediate portion with increased flexibility and decreased torsional rigidity, which may make it easier to align the connection element in the first and second recesses when connecting the first and second blade modules.

Preferably, a spanwise length of the at least one connection element is greater than the combined spanwise length of the first and second recess. Such a configuration ensures that the first and second fingers are separated by a connection region and that the connection element spans the connection region. The at least one connection element is preferably elongate in the spanwise direction, i.e. the spanwise length of the connection element is preferably greater than the width of the connection element. An elongate connection element may promote flexibility along its longitudinal (spanwise) axis such that the connection element is compliant to geometrical deviations between opposed first and second recesses.

The combined spanwise lengths of the first and second tapered portions of the connection element and of the intermediate portion of the connection element together define the overall spanwise length of the connection element.

The at least one connection element may have a substantially constant width throughout the intermediate portion. In such examples, stresses and loads transferred by the connection element may be distributed evenly throughout the intermediate portion in use. Preferably the at least one connection element has a substantially constant thickness throughout the intermediate portion. Again, stresses and loads may be distributed evenly throughout the intermediate portion in such examples. Preferably the at least one connection element has a substantially constant thickness throughout the tapered portions. Such a configuration minimises the risk of stress concentrations forming in the connection element in use.

Preferably, the at least one connection element comprises a substantially uniform profile throughout the intermediate portion when viewed in a chordwise cross section. This minimises the risk of stress concentrations forming in the connection element in use. Preferably, the intermediate portion of the at least one connection element comprises a four-sided cross-sectional profile. This reduces the torsional stiffness of the connection element in comparison to a circular cross-sectional profile (for the same amount of material), for example. The intermediate portion of the at least one connection element may therefore comprise a substantially square or rectangular cross-sectional profile.

The first tapered portion of the at least one connection element may be bonded to a plurality of first fingers. The second tapered portion of the connection element may be bonded to a plurality of second fingers. Bonded joints are preferred because the load transferred between the spar caps and connection element can be spread over a greater area, thereby minimising stress concentrations at the joint.

The connection element is bonded between first and second fingers by adhesive. The adhesive may comprise resin. Preferably the adhesive comprises polymer-based resin. The at least one connection element is substantially encased in adhesive. This minimizes the risk of dry spots or voids in the bond between the connection elements and a respective spar cap portion.

The tapering width of the first and second fingers may respectively define tapered first and second recesses between adjacent first fingers and adjacent second fingers. The width of the first and second recess may taper in an opposed sense to the tapering width of the first and second fingers. For example, the widths of the first and second recesses preferably increase towards the respective first and second finger tips. The tapered fingers and tapered portions of the at least one connection element facilitate a smooth transfer of loads between the spar cap portions and the connection element.

The first and second recesses may taper to respective points. The first and second tapered portions of the at least one connection element may taper to respective points. The modular wind turbine blade preferably comprises a substantially uniform bond gap between the first tapered portion and the first fingers, and between the second tapered portion and the second fingers. As such, the taper of the first tapered portion preferably matches the taper of the first recess. The taper of the second tapered portion preferably matches the taper of the second recess.

The modular wind turbine blade further comprises a U-shaped channel. The first and second elongate fingers extend into the U-shaped channel from opposed ends of the channel. The at least one connection element is substantially encased in adhesive within the U-shaped channel.

The U-shaped channel may be configured to reinforce the connection between the first and second spar cap portions and provide additional load paths for transferring loads between the blade modules in use. As such, the U-shaped channel may be formed of a composite material. For example, the U-shaped channel may comprise fibre-reinforced polymer. The U-shaped channel may comprise one or more plies of multi-axial fibrous reinforcing material, such as biaxial or triaxial fibrous reinforcing material. The U-shaped channel may comprise one or more layers of fibrous reinforcing material comprising unidirectional reinforcing fibres. The unidirectional reinforcing fibres preferably extend longitudinally in the spanwise direction. The U-shaped channel may comprise glass fibre reinforced plastic (GFRP). The U-shaped channel may comprise carbon reinforcing fibres.

The plurality of first recesses may be defined alongside one another in a chordwise direction. The plurality of second recesses may be defined alongside one another in the chordwise direction. The first and second recess are preferably mutually opposed and aligned when the spar cap portions are arranged for connection.

The first and second blade modules may be connected by a plurality of connection elements. Each connection element may comprise a first tapered portion received in a respective first recess and a second tapered portion received in a respective second recess. The plurality of connection elements may facilitate a simple connection method whilst still providing a robust connection with sufficient load paths to transfer loading between the spar cap portions in use.

The connection elements may be arranged in a plurality of side-by-side stacks. Preferably each stack of connection elements comprises the same number of connection elements. Each stack of connection elements preferably has a height substantially equal to a height of the first and/or second spar cap portion. Height may be defined as a dimension in a direction perpendicular to both the spanwise and chordwise directions. Height may also be referred to as thickness.

The at least one connection element may comprise exactly one first tapered portion. The at least one connection element may comprise exactly one second tapered portion. The connection element may therefore be connected between exactly one first recess and one second recess. The first and second tapered portions may extend from mutually-opposed ends of the intermediate portion. As such, the first and second tapered portions are preferably mutually-opposed.

In some examples, the at least one connection element may comprise a plurality of first tapered portions extending from the intermediate portion alongside one another in the chordwise direction. Each first tapered portion may be received in a respective first recess. The at least one connection element may comprise a plurality of second tapered portions extending from the intermediate portion alongside one another in the chordwise direction. Each second tapered portion may be received in a respective second recess. Such a connection element may facilitate a connection method requiring fewer process steps to connect the first and second spar cap portions.

The modular wind turbine blade may further comprise a spacer defining a separation between one of a first finger and the first tapered portion of the connection element, or a second finger and the second tapered portion of the connection element. The separation may also be referred to as a bond gap width. The spacer may help to ensure that the separation between the connection element and spar cap portions is maintained when connecting the blade modules.

The modular wind turbine blade preferably comprises a plurality of spacers. The modular wind turbine blade preferably comprises a spacer between each tapered portion and a corresponding finger to which the tapered portion is connected. As such, the spacers may help to ensure that that the separation is maintained between the tapered portions and fingers when connecting the blade modules. Preferably the or each spacer comprises fibre-reinforced polymer. The or each spacer may comprise glass fibre reinforced plastic (GFRP).

The first and/or second spar cap portion may comprise a stack of fibre-reinforced polymer strips, such as carbon fibre reinforced plastic (CFRP). Preferably, both the first and second spar cap portions comprise a stack of fibre-reinforced polymer strips. The fibre-reinforced polymer strips may comprise reinforcing fibres extending longitudinally in the spanwise direction. The reinforcing fibres may absorb bending loads experienced by the blade in use. The fibre-reinforced polymer strips may comprise unidirectional reinforcing fibres. Preferably, the fibre-reinforced polymer strips are pultrusions.

Preferably, the first and/or second spar cap portion comprises a plurality of side-by-side stacks of fibre-reinforced polymer strips. The side-by-side stacks may conform to the curved shape of the blade shell to minimise the occurrence of resin-rich regions between the spar cap portions and an outer skin of the blade shell. The stacks may be arranged side-by-side in the chordwise direction.

Preferably, the connection element is formed of fibre-reinforced polymer, such as CFRP. The fibre-reinforced connection element may provide suitable load paths to transfer loading between the first and second spar cap portions when the modular blade is in use. The connection element may comprise unidirectional reinforcing fibres. The connection element may comprise reinforcing fibres extending longitudinally in the spanwise direction. The connection element may be formed of a fibre-reinforced polymer pultrusion.

The connection element may comprise a thickness substantially equal to the thickness of a pultrusion in the first or second spar cap portion. As such, the connection element preferably provides a smooth load path between the pultrusions of the first and second spar cap portions and the connection element when the modules are connected.

In a second aspect of the invention there is provided a method of assembling a modular wind turbine blade according to claim 10.

The method further comprises providing a U-shaped channel, and sealing the U-shaped channel to the first spar cap portion such that the first fingers extend into the U-shaped channel from a first end of the channel. The method further comprises sealing the U-shaped channel to the second spar cap portion such that the second fingers extend into the U-shaped channel from an opposed second end of the channel. The method further comprises supplying adhesive to the U-shaped channel. When arranging the at least one connection element between the first and second spar cap portions, the method comprises substantially submerging the at least one connection element in the adhesive in the U-shaped channel. This advantageously minimizes the likelihood of voids or dry spots in the bond between the connection element and the spar cap portions.

The method may comprise supplying a first layer of adhesive in the U-shaped channel and submerging a first layer of connection elements in the first layer of adhesive. The method may further comprise supplying one or more additional layers of adhesive on top of the first layer of adhesive and the first layer of connection elements, and submerging an additional layer of connection elements in the or each additional layer of adhesive. Such a process minimises the risk of introducing foreign particles to the adhesive when submerging the connection elements therein. The method preferably comprises supplying the or each additional layer on top of any preceding layer when said preceding layer is still liquid. Adjacent layers of adhesive therefore preferably merge to form a cohesive adhesive volume.

The method may further comprise activating bonding surfaces of the first fingers and the first tapered portion before arranging the at least one connection element between the first and second spar cap portions. The method may further comprise activating bonding surfaces of the second fingers and the second tapered portion before arranging the connection element between the first and second spar cap portions. Activating the various surfaces advantageously provides an optimized surface for the adhesive to bond to.

The method may further comprise arranging a spacer between the first tapered portion and a first finger to define a separation between the first tapered portion and the first finger. The method may additionally or alternatively comprise arranging a spacer between the second tapered portion and a second finger to define a separation between the second tapered portion and the second finger. The or each spacer ensures that a minimum separation is maintained between the tapered portions and the fingers when connecting the blade modules.

### Brief description of the drawings

Embodiments of the present invention will now be described by way of non-limiting example only, with reference to the accompanying figures, in which:
Figure 1 is a schematic perspective view of a modular wind turbine blade comprising first and second blade modules;
Figure 2 is a schematic view of a connection formed between spar cap portions of the first and second blade modules;
Figure 3 is a schematic plan view of the spar cap portions arranged opposite one another prior to being connected to one another;
Figure 4 is a schematic perspective view of an example of a connection element that may be used to connect the first and second spar cap portions;
Figure 5 is an exploded plan view of the connection between the first and second spar cap portions;
Figure 6a is a schematic side view of a stage in a method of connecting the first and second blade modules wherein adhesive is supplied to a U-shaped channel that is sealed to the first and second spar cap portions;
Figure 6b is a schematic side view showing a first layer of connection elements arranged in the U-shaped channel to connect the first and second spar cap portions;
Figure 6c is a schematic plan view of a plurality of connection elements arranged side-by-side in the U-shaped channel;
Figure 6d is a schematic side view of the connection between the first and second spar cap portions following arrangement of a plurality of side-by-side stacks of connection elements in the U-shaped channel; and
Figure 7 is a schematic plan view of a connection element comprising a plurality of first and second tapered portions.

### Detailed description

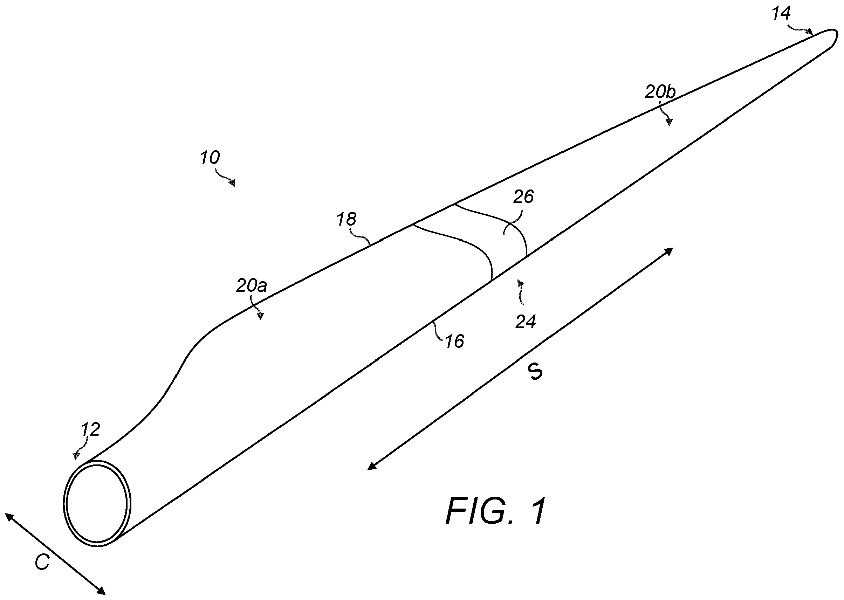

Figure 1 is a schematic perspective view of a modular wind turbine blade 10. The modular blade 10 extends longitudinally in a spanwise direction (S) between a blade root 12 and a tip 14 of the blade. The blade 10 extends in a chordwise direction (C) between a leading edge 16 and trailing edge 18. The modular wind turbine blade 10 comprises a first blade module 20a and a second blade module 20b that are connected together. The modules 20a, 20b may be transported separately and connected together at a wind turbine site to assemble the modular wind turbine blade 10.

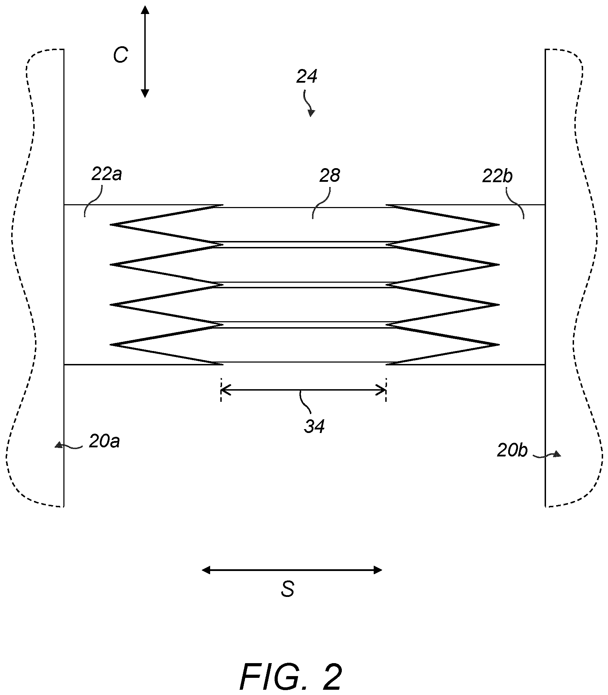

The first and second blade modules 20a, 20b are configured for connection end-to-end via respective spar cap portions 22a, 22b of each blade module (shown in Figure 2) as will be described in more detail later with reference to the remaining figures. In some examples, the connection 24 between the first and second blade modules 20a, 20b may be covered by an aerodynamic fairing 26, as shown in Figure 1 for example. As such, in preferred examples the airflow over the blade 10 is not disturbed by the connection 24 between the blade modules 20a, 20b, ensuring that the connection does not adversely affect the aerodynamic performance of the blade.

The connection 24 between the first and second blade modules 20a, 20b is shown in Figure 2. As previously mentioned, the first and second blade modules 20a, 20b are connected via spar cap portions 22a, 22b in each blade module. For example the first blade module 20a comprises a first spar cap portion 22a, and the second blade module 20b comprises a second spar cap portion 22b. The spar cap portions 22a, 22b may form part of a reinforcing spar structure when the first and second blade modules 20a, 20b are connected to form the modular blade 10. Connecting the spar cap portions 22a, 22b of the first and second blade modules 20a, 20b advantageously provides a specific reinforced load path for transferring loads between the first and second blade modules when the modular blade 10 is in use.

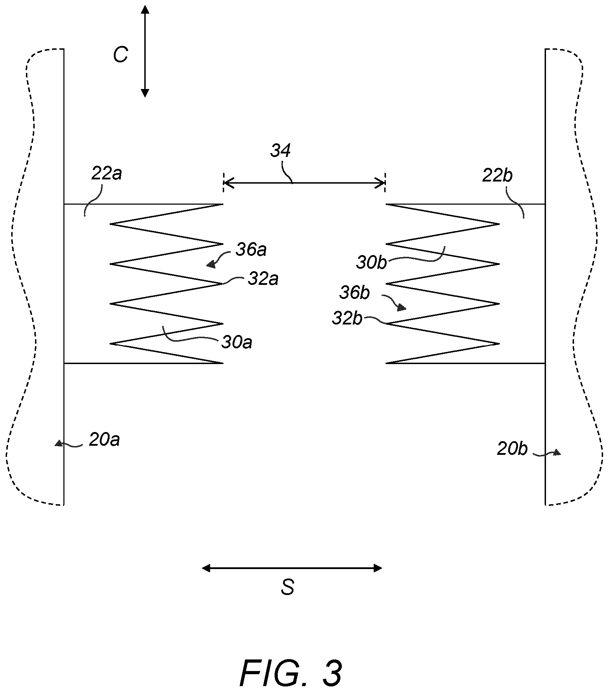

The blade modules 20a, 20b are connected together by at least one connection element 28 connecting the first and second spar cap portions 22a, 22b. In some examples, the blade modules 20a, 20b are connected by a plurality of connection elements 28 arranged side-by-side in the chordwise direction (C), as shown in Figure 2 for example. The spar cap portions 22a, 22b and examples of the connection elements 28 used to connect the first and second blade modules 20a, 20b will now be described in more detail with reference to Figure 3 to 5.

Figure 3 shows the spar cap portions 22a, 22b of the first and second blade modules 20a, 20b arranged together prior to connection. The spar cap portions 22a, 22b are configured for end-to-end connection. As such, the first spar cap portion 22a comprises a plurality of first elongate fingers 30a extending in the spanwise direction (S). The first fingers 30a each taper in width towards respective first finger tips 32a. Similarly, the second spar cap portion 22b comprises a plurality of second elongate fingers 30b extending in the spanwise direction (S). The second fingers 30b each taper in width towards respective second finger tips 32b. It will be understood that "width" in this context refers to a dimension in the chordwise direction (C), i.e. a chordwise width. The tapered fingers 30a, 30b facilitate a smooth load transfer between the spar cap portions 22a, 22b and the connection elements 28 in use.

When arranged together to connect the first and second blade modules 20a, 20b, the finger tips 32a, 32b of the first and second spar cap portions 22a, 22b are mutually opposed and separated in the spanwise direction (S). As such, a connection region 34 is defined in the spanwise gap between the first and second finger tips 32a, 32b. The provision of a connection region 34 means that any geometric variations or slight misalignments between the first and second spar cap portions 22a, 22b can be accommodated in the connection elements 28 over a greater distance.

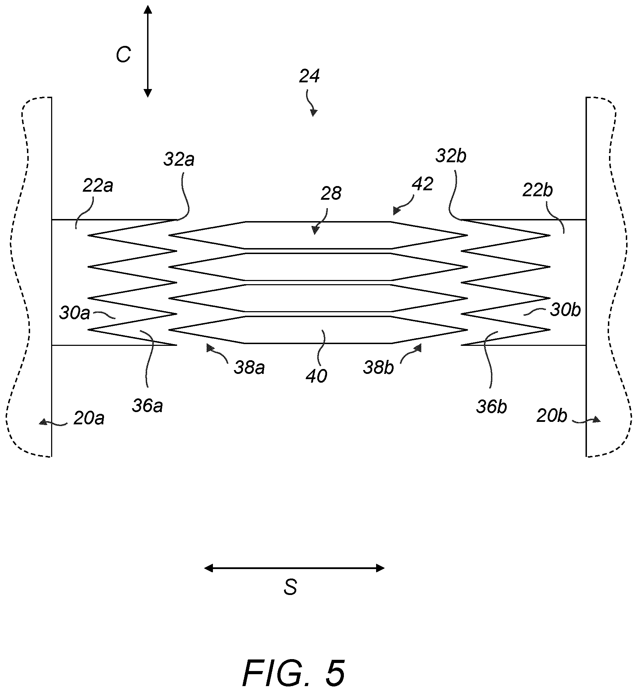

A plurality of first recesses 36a are defined between the first fingers 30a, and a plurality of second recesses 36b are defined between the second fingers 30b. In preferred examples, the plurality of first recesses 36a are defined alongside one another in the chordwise direction (C) and the plurality of second recesses 36b are similarly defined alongside one another in the chordwise direction (C). When the blade modules 20a, 20b are arranged for connection, the first and second recesses 36a, 36b may be mutually opposed in preferred examples. As will be described in more detail with reference to Figure 5, the first and second recesses 36a, 36b are configured to receive respective tapered portions 38a, 38b of a connection element 28 when connecting the first and second blade modules 20a, 20b.

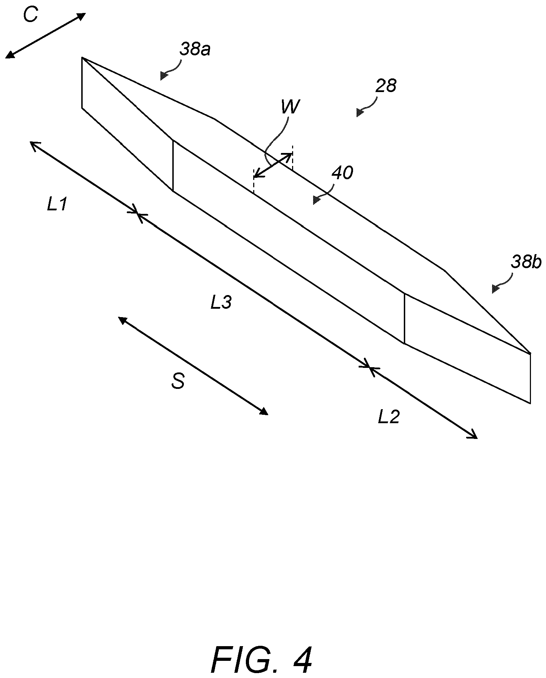

An example of a connection element 28 is shown in a schematic perspective view in Figure 4. The connection element 28 comprises a first tapered portion 38a, a second tapered portion 38b, and an intermediate portion 40 between the first and second tapered portions. In preferred examples, the first and second tapered portions 38a, 38b extend from opposite ends of the intermediate portion 40 to connect the mutually opposed first and second spar cap portions 22a, 22b of the respective blade modules 20a, 20b. The tapered portions 38a, 38b facilitate smooth load transfer between the connection element 28 and the spar cap portions 22a, 22b in use, avoiding any stress concentrations or discontinuous load paths at the joint. The tapering geometry of the first and second tapered portions 38a, 38b preferably matches the tapering geometry of the first and second recesses 36a, 36b.

The intermediate portion 40 between the first and second tapered portions 38a, 38b provides a spanwise separation between the portions of the connection element 28 that interface with, and are fixed to, each blade module 20a, 20b. As will be described in more detail below, the provision of an intermediate portion 40 allows the connection element 28 to be configured with a specific flexibility which may help to facilitate alignment of the tapered portions 38a, 38b in the respective recesses 36a, 36b when assembling the modular blade 10.

The tapered portions 38a and 38b, and intermediate portion 40, have respective spanwise lengths *L1, L2,* and *L3*. Preferably, the spanwise lengths *L1, L2* of the first and second tapered portions 38a, 38b are substantially the same. This facilitates the connection process because the connection element 28 can be arranged either way around. The spanwise length *L3* of the intermediate portion 40 is preferably greater than, or at least equal to, the spanwise length *L1, L2* of the tapered portions 38a, 38b. Configuring the intermediate portion 40 with a length *L3* greater than or equal to the length *L1, L2* of the tapered portions 38a, 38b, which are configured for fixing to the spar cap portions 22a, 22b, contributes to an increased flexibility and/or lower torsional stiffness of the connection element 28. Increasing the length *L3* of the intermediate portion 40 relative to the tapered portions 38a, 38b may therefore lead to a greater tolerance in the relative positions of the tapered portions in some examples. The process of arranging a connection element 28 to connect the spar cap portions 22a, 22b may therefore be made easier.

The combined spanwise lengths of the tapered portions 38a and 38b and the spanwise length of the intermediate portion 40 define the overall spanwise lengths of the connection element.

Another variable that may influence the flexibility and/or torsional stiffness of the connection element 28 is the width *W* of the intermediate portion 40. For example, the connection element 28 may have a substantially constant width *W* throughout the intermediate portion 40. In this context, "width" refers to a dimension in the chordwise direction (C) when the connection element 28 is arranged to connect the first and second blade modules 20a, 20b. A substantially constant width *W* throughout the intermediate portion 40 may also help to ensure that bending and torsional stresses are evenly distributed throughout the intermediate portion in use, avoiding stress concentrations. Further, a constant-width intermediate portion 40 may facilitate substantially uninterrupted load paths between the first and second spar cap portions 22a, 22b when the assembled modular blade 10 is in use. Evenly distributing the bending and torsional stresses throughout the intermediate portion is particularly useful when the connection element has an increased flexibility and/or lower torsional stiffness due to the intermediate portion having a length greater than or equal to the length of the tapered portions.

The connection element 28 may in some examples further comprise a substantially constant cross-sectional profile throughout the intermediate portion 40. Advantages described with reference to a constant-width intermediate portion 40 are similarly applicable to a connection element 28 having a substantially constant cross-sectional profile.

For ease of manufacturing the connection element 28, and for ease of assembly when connecting the blade modules 20a, 20b, the intermediate portion 40 preferably comprises a polygonal cross-sectional profile. An intermediate portion 40 having a polygonal cross-sectional profile also has a comparatively lower torsional stiffness than a circular cross-sectional profile for example, further improving the ease of assembly when connecting the blade modules 20a, 20b. For example, the connection element 28 may have a four-sided cross-sectional profile throughout the intermediate portion 40, such as the substantially square cross-sectional profile of the connection element 28 shown in Figure 4.

Figure 5 shows a schematic exploded view of the connection 24 between the first and second spar cap portions 22a, 22b. In this example, the first and second spar cap portions 22a, 22b are connected by a plurality of connection elements 28 arranged side-by-side in the chordwise direction (C). In such examples, the plurality of connection elements 28 are preferably all the same, i.e. configured in the same manner. This advantageously aids in evenly distributing the loads and stresses transferred between the spar cap portions 22a, 22b across each of the connection elements 28.

When the first and second blade modules 20a, 20b are connected by the connection elements 28, the first tapered portion 38a of each connection element 28 is received in a first recess 36a between adjacent first fingers 30a of the first spar cap portion 22a. Similarly, the second tapered portion 38b of each connection element 28 is received in a second recess 36b between adjacent second fingers 30b of the second spar cap portion 22b. With the connection elements 28 arranged to connect the first and second spar cap portions 22a, 22b, the intermediate portions 40 of the connection elements are arranged in the connection region 34, i.e. in the spanwise gap between the first and second finger tips 32a, 32b, as shown in Figure 2 for example.

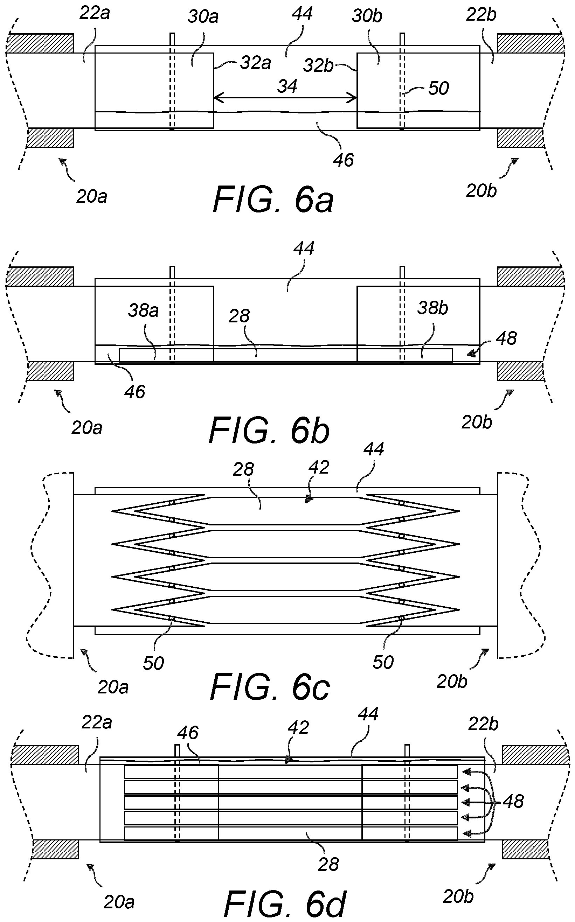

The connection elements 28 may be arranged in a plurality of side-by-side stacks 42 to connect the blade modules 20a, 20b. Figure 5 shows a plan view of the connection 24, i.e. from a windward of leeward side of the modular wind turbine blade 10, and so only the top connection element 28 in each stack 42 is visible. A stack 42 of connection elements 28 can be seen most clearly in Figure 6d for example. Forming the connection 24 between the first and second blade modules 20a, 20b from a plurality of stacks 42 of connection elements 28 may facilitate a particularly advantageous method for connecting the blade modules 20a, 20b.

For example, each individual connection element 28 can be independently arranged and aligned in the respective first and second recesses 36a, 36b without any constraints from alignment between other first and second recesses. As such, the connection 24 between the blade modules 20a, 20b may be less sensitive to geometrical tolerances and slight misalignments between the spar cap portions 22a, 22b. In addition, the individual connection elements 28 may be substantially small and easy to handle, further facilitating the connection process at a wind turbine site.

As previously described, individual connection elements 28 may be relatively flexible and/or have a low torsional stiffness to aid in the alignment of the connection element in the recesses 36a, 36b. Forming the connection 24 of a plurality of stacks 42 of connection elements 28 in combination advantageously provides the connection with the requisite strength, rigidity and load transfer capacity for safely transferring loads between the blade modules 20a, 20b in use, whilst still facilitating an improved assembly method.

To connect the first and second spar cap portions 22a, 22b, the first tapered portion 38a of a connection element 28 is preferably bonded to a plurality of first fingers 30a, and the second tapered portion 38b of the connection element is preferably bonded to a plurality of second fingers 30b. The connection element 28 may be bonded to the first and second fingers 30a, 30b using a paste adhesive or a liquid adhesive in some examples. In some preferred examples, the connection elements 28 may be substantially encased in a liquid adhesive. Such a bonding method advantageously minimizes the risk of voids in the bond between the connection elements 28 and the spar cap portions 22a, 22b. For example, the connection elements 28 may be bonded to the spar cap portions 22a, 22b according to a method that will now be described in more detail with reference to Figures 6a to 6d.

Referring initially to Figure 6a, this shows a side view of the first and second blade modules 20a, 20b arranged end-to-end for connection via their respective spar cap portions 22a, 22b. A U-shaped channel 44 may be sealed to the first and second spar cap portions 22a, 22b in some preferred examples. The U-shaped channel 44 is arranged with the spar cap portions 22a, 22b such that the fingers 30a of the first spar cap portion 22a extend into the U-shaped channel 44 from a first end of the channel, and the fingers 30b of the second spar cap portion 22b extend into the channel from an opposed second end. The blade modules 20a, 20b are arranged such that the first and second finger tips 32a, 32b are mutually opposed and spaced apart in the spanwise direction (S). The connection region 34 is therefore defined between the first and second finger tips 32a, 32b in the U-shaped channel 44.

The U-shaped channel 44 advantageously provides a trough for holding adhesive 46 for bonding the connection elements 28 to the spar cap portions 22a, 22b. As such, the method comprises supplying adhesive 46 to the U-shaped channel 44 as shown in Figure 6a. In examples where the blade modules 20a, 20b are connected by a plurality of connection elements 28 in a stacked configuration, the method may comprise initially providing a first layer of adhesive 46 sufficient for submerging a first layer 48 of connection elements 28. One or more spacers 50 may also be arranged in the U-shaped channel 44 as will be described in more detail with reference to Figure 6c.

Referring now to Figures 6b and 6c, after supplying a first layer of adhesive 46 to the U-shaped channel 44, the method may comprise submerging a first layer 48 of connection elements 28 in the adhesive in the channel. Figure 6c shows a plan view of a plurality of connection elements 28 arranged side-by-side in the U-shaped channel 44 to connect the first and second blade modules 20a, 20b. The connection elements 28 are substantially encased in adhesive 46 in the channel 44. Such a connection method advantageously ensures that the tapered portions 38a, 38b of the connection elements 28 are thoroughly bonded to the respective fingers 30a, 30b of the first and second spar cap portions 22a, 22b, and helps to minimize the risk of voids in the bond.

As shown in the side view of Figure 6d, following arrangement of a first layer 48 of connection elements 28 in the U-shaped channel 44, the method may further comprise arranging one or more additional layers 48 of connection elements in the channel. Such an arrangement of connection elements 28 forms a plurality of side-by-side stacks 42 of connection elements connecting the first and second spar cap portions 22a, 22b. Arranging the or each additional layer 48 of connection elements 28 may follow the same process as described with reference to the first layer, i.e. arranging a layer of adhesive 46 and subsequently submerging a layer 48 of connection elements 28 in that adhesive layer, before repeating the process for subsequent layers. Subsequent layers of adhesive 46 are preferably supplied whilst the preceding adhesive layer is still in a liquid state such that the plurality of adhesive layers form a cohesive volume of adhesive.

Alternatively, the method may comprise supplying the total required volume of adhesive 46 to the U-shaped channel 44 in an initial step, and subsequently arranging a plurality of layers 48 of side-by-side connection elements 28 in the channel. This similarly helps to ensure a thorough bond is achieved with no voids between the fingers 30a, 30b and the connection elements 28. In other examples, the method may comprise arranging a plurality of side-by-side stacks 42 of connection elements 28 in the U-shaped channel 44 and subsequently supplying adhesive 46 to flood the channel and submerge the connection elements therein. Such a method helps to avoid the risk of introducing any foreign particles into the adhesive 46 when arranging the connection elements 28.

However, in preferred examples, the connection elements 28 and adhesive 46 are arranged as described above, by building up the layers 48 of connection elements and adhesive in the U-shaped channel 44 layer-by-layer. This avoids submerging the connection elements 28 in the initial layers 48 through a great depth of adhesive 46, thereby minimizing the risk of introducing dirt or other undesirable foreign particles into the adhesive. Further this method also ensures a thorough bond with no dry spots because all surfaces of the connection elements 28 contact the adhesive 46 when being submerged in a respective adhesive layer.

As previously noted with reference to Figure 6a, one or more spacers 50 may be arranged in the U-shaped channel 44 (as shown most clearly in Figure 6c). The spacers 50 may define a separation between the tapered portions 38a, 38b of the connection element 28 and the respective fingers 30a, 30b of the spar cap portions 22a, 22b.

For example, a spacer 50 may be arranged between the first tapered portion 38a and the fingers 30a of the first spar cap portion 22a to ensure that a consistent bond gap is maintained between the connection element 28 and the first spar cap portion. Similarly, in preferred examples, a spacer 50 may also be arranged between the second tapered portion 38b of a connection element 28 and the fingers 30b of the second spar cap portion 22b to maintain a consistent bond gap between the connection element and the second spar cap portion. The spacers 50 may maintain a substantially uniform bond gap between the connection element 28 and the spar cap portions 22a, 22b to ensure that these do not come into direct contact, thereby avoiding the risk of dry spots or voids in the bond between the connection element and the spar cap portions.

The U-shaped channel 44 may be fixed to the spar cap portions 22a, 22b in some examples. The U-shaped channel 44 may therefore restrict relative movement between the first and second spar cap portions 22a, 22b in some examples, helping to maintain the alignment between the first and second spar cap portions throughout the connection process.

In some examples, the channel 44 may remain attached to the spar cap portions 22a, 22b after the adhesive 46 bonding the connection elements 26 in place is cured. As such, the U-shaped channel 44 may be integrated as part of the connection 24 and may provide additional reinforcement. In some examples, the U-shaped channel 44 may therefore be configured to additionally transfer loads between the blade modules 20a, 20b in use. For example, the U-shaped channel 44 may be formed of a composite material, such as fibre reinforced polymer, to provide additional load paths between the first and second spar cap portions 22a, 22b.

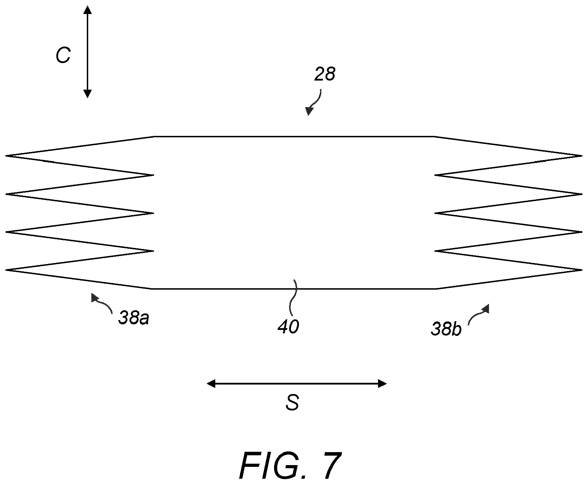

Referring now to Figure 7, this shows an example of a connection element 28 having a plurality of first tapered portions 38a extending from the intermediate portion 40 alongside one another in the chordwise direction (C). Similarly, the connection element 28 may comprise a plurality of second tapered portions 38b extending from the intermediate portion 40 alongside one another in the chordwise direction (C). The spar cap portions 22a, 22b may therefore be connected by a single stack 42 of connection elements 28 in some examples, where each layer 48 in the stack comprises a single connection element having a plurality of first and second tapered portions 38a, 38b. Such a connection element 28 may be advantageous in some examples because fewer individual process steps are required to form the connection 24 between the blade modules 20a, 20b.

It will be appreciated that aspects of the description presented previously in relation to connection elements 28 having a single first and second tapered portion 38a, 38b apply equally to this example. For example, each first tapered portion 38a may be received in a respective first recess 36a between fingers 30a of the first spar cap portion 22a, and each second tapered portion 38b may be received in a respective second recess 36b between fingers 30b of the second spar cap portion 22b.

However, in preferred examples, the modular wind turbine blade 10 comprises a plurality of connection elements 28 arranged side-by-side. For example, as previously described, connection elements 28 having a single first and second tapered portion 38a, 38b may be more flexible and compliant to geometric variations or misalignments, and therefore simpler to arrange when connecting the first and second blade modules 20a, 20b.

In the above-described examples, the first blade module 20a comprises the root 12 of the blade 10, and the second blade module 20b comprises the tip 14 of the blade. It will be appreciated that in other examples, the first and/or second blade module 20a, 20b may be an intermediate module and may not comprise the root 12 or tip 14 of the blade 10.

Whilst a single connection 24 between a first and second spar cap portion 22a, 22b has been described above, it will be appreciated that a wind turbine blade 10 may comprise connections as described herein formed between one or more other pairs of mutually opposed spar cap portions to connect the first and second blade modules 20a, 20b. Further, whilst the examples shown in the figures comprise four side-by-side stacks 42 of connection elements 28, it will be appreciated that this is presented merely as a simple example and any number of side-by-side stacks 42 may be used to connect the first and second blade modules 20a, 20b. Similarly, it will be appreciated that each stack 42 may comprise any number of connection elements 28.

A modular wind turbine blade connection scheme as described herein has many advantages as set out above. In particular, the connection 24 described herein facilitates an improved method of forming the connection between adjacent blade modules 20a, 20b. The connection elements 28 are forgiving to small deviations or misalignments between the mutually opposed spar cap portions 22a, 22b and are therefore simple to arrange in the recesses 36a, 36b to connect the blade modules 20a, 20b. However, the connection elements 28 and adhesive bond still provide a robust and strong connection with a high capacity for transferring loads between the spar cap portions 22a, 22b in use.

The above-described connection scheme does not demand such high-precision alignment of the whole blade modules 20a, 20b as previous proposed connection methods where features of a first blade module align and interface directly with features of a second blade module. The provision of an intermediate portion 40 between the tapered portions 38a, 38b of the connection elements 28 means that the connection element is better able to absorb deviations in the alignment of the first and second spar cap portions 22a, 22b, because of the flexibility of the intermediate portion and/or because of the spanwise distance over which any misalignments may be taken up. Further, in examples where there are multiple connections 24 between the blade modules 20a, 20b, e.g. connections between multiple pairs of spar cap portions 22a, 22b, each connection can be made separately because the spar cap portions are connected via a connection element 28 and do not need to interface directly with one another.

It will be appreciated that the description provided above serves to demonstrate a plurality of possible examples of the present invention. Features described in relation to any of the examples above may be readily combined with any other features described with reference to other examples without departing from the scope of the invention as defined in the appended claims. Further, it will be appreciated that the above description and accompanying figures are provided merely as an example. Many alternatives to the specific examples described above are therefore possible without departing from the scope of the invention as defined in the appended claims.

## Claims

1. A modular wind turbine blade (10) comprising a first blade module (20a) and a second blade module (20b), the first blade module comprising a first spar cap portion (22a) extending longitudinally in a spanwise direction, and the second blade module comprising a second spar cap portion (22b) extending longitudinally in the spanwise direction, the blade modules being configured for connection end-to-end via their respective spar cap portions,
the first spar cap portion (22a) comprising a plurality of first elongate fingers (30a) defining a plurality of first recesses (36a) therebetween, the first fingers extending in the spanwise direction and tapering in width towards respective first finger tips (32a);
the second spar cap portion (22b) comprising a plurality of second elongate fingers (30b) defining a plurality of second recesses (36b) therebetween, the second fingers extending in the spanwise direction and tapering in width towards respective second finger tips (32b);
the first and second finger tips (32a, 32b) being mutually opposed and spaced apart in the spanwise direction such that a connection region (34) is defined between the first and second finger tips;
the first and second blade modules (20a, 20b) being connected by at least one connection element (28) comprising a first tapered portion (38a), a second tapered portion (38b), and an intermediate portion (40) between the first and second tapered portions;
wherein the first tapered portion (38a) is received in a first recess (36a) between adjacent first fingers (30a), the second tapered portion (38b) is received in a second recess (36b) between adjacent second fingers (30b), and the intermediate portion (40) is located in the connection region (34); **characterised in that**:
the modular wind turbine blade further comprises a U-shaped channel (44), wherein the first and second elongate fingers (30a, 30b) extend into the U-shaped channel from opposed ends of the channel, and wherein the at least one connection element is substantially encased in adhesive (46) within the U-shaped channel.

2. The modular wind turbine blade of Claim 1, wherein the intermediate portion of the at least one connection element has a spanwise length greater than or equal to the spanwise length of the first and/or second tapered portion of the at least one connection element.

3. The modular wind turbine blade of any preceding claim, wherein the at least one connection element has a substantially constant width throughout the intermediate portion.

4. The modular wind turbine blade of any preceding claim, wherein the first tapered portion of the at least one connection element is bonded to a plurality of first fingers and the second tapered portion of the connection element is bonded to a plurality of second fingers.

5. The modular wind turbine blade of any preceding claim, wherein the plurality of first recesses are defined alongside one another in a chordwise direction and the plurality of second recesses are defined alongside one another in the chordwise direction.

6. The modular wind turbine blade of any preceding claim, wherein the first and second blade modules are connected by a plurality of connection elements, each connection element comprising a first tapered portion received in a respective first recess and a second tapered portion received in a respective second recess.

7. The modular wind turbine blade of Claim 6, wherein the connection elements are arranged in a plurality of side-by-side stacks.

8. The modular wind turbine blade of Claim 5, wherein the at least one connection element comprises a plurality of first tapered portions extending from the intermediate portion alongside one another in the chordwise direction, and a plurality of second tapered portions extending from the intermediate portion alongside one another in the chordwise direction, each first tapered portion being received in a respective first recess and each second tapered portion being received in a respective second recess.

9. The modular wind turbine blade of any preceding claim, further comprising a spacer defining a separation between one of a first finger and the first tapered portion of the connection element, or a second finger and the second tapered portion of the connection element.

10. A method of assembling a modular wind turbine blade (10) comprising a first blade (20a) module and a second blade module (20b), the method comprising:
providing a first blade module (20a) comprising a first spar cap portion (22a) extending longitudinally in a spanwise direction, the first spar cap portion comprising a plurality of first elongate fingers (30a) defining a plurality of first recesses (36a) therebetween, the first fingers extending in the spanwise direction and tapering in width towards respective first finger tips (32a);
providing a second blade module (20b) comprising a second spar cap portion (22b) extending longitudinally in a spanwise direction, the second spar cap portion comprising a plurality of second elongate fingers (30b) defining a plurality of second recesses (36b) therebetween, the second fingers extending in the spanwise direction and tapering in width towards respective second finger tips (32b);
providing at least one connection element (28) comprising a first tapered portion (38a), a second tapered portion (38b), and an intermediate portion (40) between the first and second tapered portions;
arranging the first blade module (20a) with the second blade module (20b) such that the first and second finger tips (32a, 32b) are mutually opposed and spaced apart in the spanwise direction to define a connection region (34) between the first and second finger tips; and
arranging the at least one connection element (28) between the first and second spar cap portions (22a, 22b) such that the first tapered portion (38a) is received in a first recess (36a) between adjacent first fingers, the second tapered portion (38b) is received in a second recess (36b) between adjacent second fingers, and the intermediate portion (40) is located in the connection region (34); **characterised by**:
providing a U-shaped channel (44);
sealing the U-shaped channel to the first spar cap portion (22a) such that the first fingers (30a) extend into the U-shaped channel from a first end of the channel;
sealing the U-shaped channel to the second spar cap portion (22b) such that the second fingers extend into the U-shaped channel from an opposed second end of the channel;
supplying adhesive (46) to the U-shaped channel; and
when arranging the at least one connection element (28) between the first and second spar cap portions (22a, 22b), substantially submerging the at least one connection element in the adhesive in the U-shaped channel.

## Patentansprüche

1. Modulares Windkraftanlagenblatt (10), das ein erstes Blattmodul (20a) und ein zweites Blattmodul (20b) umfasst, wobei das erste Blattmodul einen ersten Gurtabschnitt (22a) umfasst, der sich längs in Spannweitenrichtung erstreckt, und das zweite Blattmodul einen zweiten Gurtabschnitt (22b) umfasst, der sich längs in Spannweitenrichtung erstreckt, wobei die Blattmodule zur Ende-an-Ende-Verbindung über ihre jeweiligen Gurtabschnitte konfiguriert sind,
wobei der erste Gurtabschnitt (22a) eine Vielzahl von ersten länglichen Fingern (30a) umfasst, die zwischen sich eine Vielzahl von ersten Aussparungen (36a) definieren, wobei sich die ersten Finger in Spannweitenrichtung erstrecken und in der Breite zu jeweiligen ersten Fingerspitzen (32a) hin verjüngen;
wobei der zweite Gurtabschnitt (22b) eine Vielzahl von zweiten länglichen Fingern (30b) umfasst, die zwischen sich eine Vielzahl von zweiten Aussparungen (36b) definieren, wobei sich die zweiten Finger in Spannweitenrichtung erstrecken und in der Breite zu jeweiligen zweiten Fingerspitzen (32b) hin verjüngen;
wobei die ersten und die zweiten Fingerspitzen (32a, 32b) einander gegenüberliegen und in Spannweitenrichtung voneinander beabstandet sind, sodass zwischen den ersten und den zweiten Fingerspitzen ein Verbindungsbereich (34) definiert wird;
wobei das erste und das zweite Blattmodul (20a, 20b) über mindestens ein Verbindungselement (28), das einen ersten verjüngten Abschnitt (38a), einen zweiten verjüngten Abschnitt (38b) und einen Zwischenabschnitt (40) zwischen dem ersten und zweiten verjüngten Abschnitt umfasst, verbunden sind;
wobei der erste verjüngte Abschnitt (38a) in einer ersten Aussparung (36a) zwischen benachbarten ersten Fingern (30a) aufgenommen ist, der zweite verjüngte Abschnitt (38b) in einer zweiten Aussparung (36b) zwischen benachbarten zweiten Fingern (30b) aufgenommen ist und der Zwischenabschnitt (40) im Verbindungsbereich (34) liegt; **dadurch gekennzeichnet, dass**:
das modulare Windkraftanlagenblatt weiter einen U-förmigen Kanal (44) umfasst, wobei sich die ersten und die zweiten länglichen Finger (30a, 30b) von gegenüberliegenden Enden des Kanals in den U-förmigen Kanal erstrecken, und wobei das mindestens eine Verbindungselement im Wesentlichen in Klebstoff (46) innerhalb des U-förmigen Kanals eingeschlossen ist.

2. Modulares Windkraftanlagenblatt nach Anspruch 1, wobei der Zwischenabschnitt des mindestens einen Verbindungselements eine Länge in Spannweitenrichtung aufweist, die größer oder gleich der Länge in Spannweitenrichtung des ersten und/oder des zweiten verjüngten Abschnitts des mindestens einen Verbindungselements ist.

3. Modulares Windkraftanlagenblatt nach einem vorstehenden Anspruch, wobei das mindestens eine Verbindungselement über den gesamten Zwischenabschnitt eine im Wesentlichen konstante Breite aufweist.

4. Modulares Windkraftanlagenblatt nach einem vorstehenden Anspruch, wobei der erste verjüngte Abschnitt des mindestens einen Verbindungselements an eine Vielzahl von ersten Fingern gebunden ist und der zweite verjüngte Abschnitt des Verbindungselements an eine Vielzahl von zweiten Fingern gebunden ist.

5. Modulares Windkraftanlagenblatt nach einem vorstehenden Anspruch, wobei die Vielzahl von ersten Aussparungen in Schwenkrichtung nebeneinander definiert sind, und die Vielzahl von zweiten Aussparungen in Schwenkrichtung nebeneinander definiert sind.

6. Modulares Windkraftanlagenblatt nach einem vorstehenden Anspruch, wobei das erste und zweite Blattmodul über eine Vielzahl von Verbindungselementen verbunden sind, wobei jedes Verbindungselement einen ersten verjüngten Abschnitt, der in einer jeweiligen ersten Aussparung aufgenommen ist, und einen zweiten verjüngten Abschnitt, der in einer jeweiligen zweiten Aussparung aufgenommen ist, umfasst.

7. Modulares Windkraftanlagenblatt nach Anspruch 6, wobei die Verbindungselemente in einer Vielzahl von nebeneinanderliegenden Stapeln angeordnet sind.

8. Modulares Windkraftanlagenblatt nach Anspruch 5, wobei das mindestens eine Verbindungselement eine Vielzahl von ersten verjüngten Abschnitten, die sich vom Zwischenabschnitt in Schwenkrichtung nebeneinander erstrecken, und eine Vielzahl von zweiten verjüngten Abschnitten, die sich vom Zwischenabschnitt in Schwenkrichtung nebeneinander erstrecken, umfasst, wobei jeder erste verjüngte Abschnitt in einer jeweiligen ersten Aussparung aufgenommen ist und jeder zweite verjüngte Abschnitt in einer jeweiligen zweiten Aussparung aufgenommen ist.

9. Modulares Windkraftanlagenblatt nach einem vorstehenden Anspruch, das weiter einen Abstandshalter umfasst, der eine Trennung zwischen einem von einem ersten Finger und dem ersten verjüngten Abschnitt des Verbindungselements oder von einem zweiten Finger und dem zweiten verjüngten Abschnitt des Verbindungselements definiert.

10. Verfahren zum Zusammenbauen eines modularen Windkraftanlagenblattes (10), das ein erstes Blattmodul (20a) und ein zweites Blattmodul (20b) umfasst, wobei das Verfahren umfasst:
Bereitstellen eines ersten Blattmoduls (20a), das einen ersten Gurtabschnitt (22a) umfasst, der sich längs in Spannweitenrichtung erstreckt, wobei der erste Gurtabschnitt eine Vielzahl von ersten länglichen Fingern (30a) umfasst, die zwischen sich eine Vielzahl von ersten Aussparungen (36a) definieren, wobei sich die ersten Finger in Spannweitenrichtung erstrecken und in der Breite zu jeweiligen ersten Fingerspitzen (32a) hin verjüngen;
Bereitstellen eines zweiten Blattmoduls (20b), das einen zweiten Gurtabschnitt (22b) umfasst, der sich längs in Spannweitenrichtung erstreckt, wobei der zweite Gurtabschnitt eine Vielzahl von zweiten länglichen Fingern (30b) umfasst, die zwischen sich eine Vielzahl von zweiten Aussparungen (36b) definieren, wobei sich die zweiten Finger in Spannweitenrichtung erstrecken und in der Breite zu jeweiligen zweiten Fingerspitzen (32b) hin verjüngen;
Bereitstellen mindestens eines Verbindungselements (28), das einen ersten verjüngten Abschnitt (38a), einen zweiten verjüngten Abschnitt (38b) und einen Zwischenabschnitt (40) zwischen dem ersten und zweiten verjüngten Abschnitt umfasst:
Anordnen des ersten Blattmoduls (20a) mit dem zweiten Blattmodul (20b), sodass die ersten und zweiten Fingerspitzen (32a, 32b) einander gegenüberliegen und in Spannweitenrichtung voneinander beabstandet sind, um einen Verbindungsbereich (34) zwischen den ersten und den zweiten Fingerspitzen zu definieren; und
Anordnen des mindestens einen Verbindungselements (28) zwischen dem ersten und zweiten Gurtabschnitt (22a, 22b), sodass der erste verjüngte Abschnitt (38a) in einer ersten Aussparung (36a) zwischen benachbarten ersten Fingern aufgenommen ist, der zweite verjüngte Abschnitt (38b) in einer zweiten Aussparung (36b) zwischen benachbarten zweiten Fingern aufgenommen ist und der Zwischenabschnitt (40) im Verbindungsbereich (34) liegt; **gekennzeichnet durch**:
Bereitstellen eines U-förmigen Kanals (44);
Abdichten des U-förmigen Kanals zum ersten Gurtabschnitt (22a), sodass sich die ersten Finger (30a) von einem ersten Ende des Kanals in den U-förmigen Kanal erstrecken;
Abdichten des U-förmigen Kanals zum zweiten Gurtabschnitt (22b), sodass sich die zweiten Finger von einem gegenüberliegenden zweiten Ende des Kanals in den U-förmigen Kanal erstrecken;
Zuführen von Klebstoff (46) in den U-förmigen Kanal; und
beim Anordnen des mindestens einen Verbindungselements (28) zwischen dem ersten und dem zweiten Gurtabschnitt (22a, 22b), im Wesentlichen Eintauchen des mindestens einen Verbindungselements in den Klebstoff im U-förmigen Kanal.

## Revendications

1. Pale d'éolienne modulaire (10) comprenant un premier module pale (20a) et un second module pale (20b), le premier module pale comprenant une première partie de capuchon de longeron (22a) s'étendant longitudinalement dans le sens de l'envergure, et le second module pale (24b) comprenant une seconde partie de capuchon de longeron (22b) s'étendant longitudinalement dans le sens de l'envergure, les modules pale étant configurés pour être raccordés bout à bout via leurs parties de capuchons de longeron respectives,
la première partie de capuchon de longeron (22a) comprenant une pluralité de premiers doigts allongés (30a) définissant une pluralité de premiers évidements (36a) entre ceux-ci, les premiers doigts s'étendant dans le sens de l'envergure et diminuant en largeur vers les premières extrémités de doigt respectives (32a) ;
la seconde partie de capuchon de longeron (22b) comprenant une pluralité de seconds doigts allongés (30b) définissant une pluralité de seconds évidements (36b) entre ceux-ci, les seconds doigts s'étendant dans le sens de l'envergure et diminuant en largeur vers les secondes extrémités de doigt respectives (32b) ;
les premières et secondes extrémités de doigt (32a, 32b) étant mutuellement opposées et espacées dans le sens de l'envergure de telle sorte qu'une région de raccordement (34) est définie entre les premières et secondes extrémités de doigt ;
les premier et second modules pale (20a, 20b) étant reliés par au moins un élément de raccordement (28) comprenant une première partie conique (38a), une seconde partie conique (38b) et une partie intermédiaire (40) entre les première et seconde parties coniques ;
dans laquelle la première partie conique (38a) est reçue dans un premier évidement (36a) entre des premiers doigts adjacents (30a), la seconde partie conique (38b) est reçue dans un second évidement (36b) entre des seconds doigts adjacents (30b), et la partie intermédiaire (40) est située dans la région de raccordement (34) ; **caractérisée en ce que** :
la pale d'éolienne modulaire comprend en outre un canal en U (44), dans laquelle les premiers et seconds doigts allongés (30a, 30b) s'étendent dans le canal en U à partir d'extrémités opposées du canal, et dans laquelle le au moins un élément de raccordement est sensiblement recouvert d'adhésif (46) à l'intérieur du canal en U.

2. Pale d'éolienne modulaire selon la revendication 1, dans laquelle la partie intermédiaire du au moins un élément de raccordement présente une longueur dans le sens de l'envergure supérieure ou égale à la longueur dans le sens de l'envergure de la première et/ou seconde partie conique du au moins un élément de raccordement.

3. Pale d'éolienne modulaire selon une quelconque revendication précédente, dans laquelle le au moins un élément de raccordement présente une largeur sensiblement constante dans toute la partie intermédiaire.

4. Pale d'éolienne modulaire selon une quelconque revendication précédente, dans laquelle la première partie conique du au moins un élément de raccordement est liée à une pluralité de premiers doigts et la seconde partie conique de l'élément de raccordement est liée à une pluralité de seconds doigts.

5. Pale d'éolienne modulaire selon une quelconque revendication précédente, dans laquelle la pluralité de premiers évidements sont définis les uns à côté des autres dans le sens de la corde et la pluralité de seconds évidements sont définis les uns à côté des autres dans le sens de la corde.

6. Pale d'éolienne modulaire selon une quelconque revendication précédente, dans laquelle les premier et second modules pale sont reliés par une pluralité d'éléments de raccordement, chaque élément de raccordement comprenant une première partie conique reçue dans un premier évidement respectif et une seconde partie conique reçue dans un second évidement respectif.

7. Pale d'éolienne modulaire selon la revendication 6, dans laquelle les éléments de raccordement sont agencés en une pluralité de piles côte à côte.

8. Pale d'éolienne modulaire selon la revendication 5, dans laquelle le au moins un élément de raccordement comprend une pluralité de premières parties coniques s'étendant à partir de la partie intermédiaire les unes à côté des autres dans le sens de la corde, et une pluralité de secondes parties coniques s'étendant à partir de la partie intermédiaire les unes à côté des autres dans le sens de la corde, chaque première partie conique étant reçue dans un premier évidement respectif et chaque seconde partie conique étant reçue dans un second évidement respectif.

9. Pale d'éolienne modulaire selon une quelconque revendication précédente, comprenant en outre une entretoise définissant une séparation entre un élément parmi un premier doigt et la première partie conique de l'élément de raccordement, ou un second doigt et la seconde partie conique de l'élément de raccordement.

10. Procédé d'assemblage d'une pale d'éolienne modulaire (10) comprenant un premier module pale (20a) et un second module pale (20b), le procédé comprenant :
la fourniture d'un premier module pale (20a) comprenant une première partie de capuchon de longeron (22a) s'étendant longitudinalement dans un sens de l'envergure, la première partie de capuchon de longeron comprenant une pluralité de premiers doigts allongés (30a) définissant une pluralité de premiers évidements (36a) entre ceux-ci, les premiers doigts s'étendant dans le sens de l'envergure et diminuant en largeur vers les premières extrémités de doigt respectives (32a) ;
la fourniture d'un second module pale (20b) comprenant une seconde partie de capuchon de longeron (22b) s'étendant longitudinalement dans un sens de l'envergure, la seconde partie de capuchon de longeron comprenant une pluralité de seconds doigts allongés (30b) définissant une pluralité de seconds évidements (36b) entre ceux-ci, les seconds doigts s'étendant dans le sens de l'envergure et diminuant en largeur vers les secondes extrémités de doigt respectives (32b) ;
la fourniture d'au moins un élément de raccordement (28) comprenant une première partie conique (38a), une seconde partie conique (38b) et une partie intermédiaire (40) entre les première et seconde parties coniques ;
l'agencement du premier module pale (20a) avec le second module pale (20b) de telle sorte que les premières et secondes extrémités de doigt (32a, 32b) soient mutuellement opposées et espacées dans le sens de l'envergure pour définir une région de raccordement (34) entre les premières et secondes extrémités de doigt ; et
l'agencement du au moins un élément de raccordement (28) entre les première et seconde parties de capuchon de longeron (22a, 22b) de telle sorte que la première partie conique (38a) soit reçue dans un premier évidement (36a) entre des premiers doigts adjacents, que la seconde partie conique (38b) soit reçue dans un second évidement (36b) entre des seconds doigts adjacents, et que la partie intermédiaire (40) soit située dans la région de raccordement (34) ; **caractérisé par** :
la fourniture d'un canal en U (44) ;
le scellage du canal en U sur la première partie de capuchon de longeron (22a) de telle sorte que les premiers doigts (30a) s'étendent dans le canal en U à partir d'une première extrémité du canal ;
le scellage du canal en U sur la seconde partie de capuchon de longeron (22b) de telle sorte que les seconds doigts s'étendent dans le canal en U à partir d'une seconde extrémité opposée du canal ;
l'apport d'adhésif (46) dans le canal en U ; et
lors de l'agencement du au moins un élément de raccordement (28) entre les première et seconde parties de capuchon de longeron (22a, 22b), l'immersion sensiblement totale du au moins un élément de raccordement dans l'adhésif dans le canal en U.
